# EUROPEAN PATENT SPECIFICATION

(11) **EP 2 778 968 B1**
(45) Date of publication and mention of the grant of the patent: **30.09.2015**
(21) Application number: 14158673.5
(22) Date of filing: 10.03.2014
(51) Int. Cl.: G06F 17/30

(54) **Mobile telecommunication device remote access to cloud-based or virtualized database systems**
Fernzugriff einer mobilen Telekommunikationsvorrichtung auf Cloud-basierte oder virtualisierte Datenbanksysteme
Accès à distance d'un dispositif de télécommunication mobile à des systèmes de base de données virtualisés ou en nuage

(30) Priority: 14.03.2013 US 201313828027
(43) Date of publication of application: 17.09.2014
(73) Proprietor: SAP SE, 69190 Walldorf (DE)
(72) Inventor: Kemmler, Andreas, 69190 Walldorf (DE); Kamenz, Torsten, 69190 Walldorf (DE)
(74) Representative: Richardt Patentanwälte PartG mbB

(56) References cited:
- WO-A2-01/42882
- US-A1- 2003 120 659
- US-A1- 2006 074 953
- US-A1- 2008 319 968
- US-A1- 2010 241 644
- US-A1- 2010 332 510

## Description

### Field of the invention

Embodiments mainly relate to telecommunication methods for remote access to cloud-based or virtualized database systems by mobile telecommunication devices via a digital cellular mobile telecommunication network.

### Background

Many individuals take benefit from mobile cellular communication technology and social media technologies to make decisions and to execute transactions in an instant. Ability for handling real-time data therefore may be useful to improve systems for telematics and traffic management, systems for electric power distribution, electronic payment systems, data warehousing, data mining and any other kind of knowledge extraction systems. Additionally, real-time data processing may help to detect fraud at the earliest possible time and to evaluate financial or technical risk on spot.

Especially, billing and/or service charging implementations in cellular telecommunication network infrastructure typically are subject to architecturally contradicting requirements. On one hand, cellular networks may be understood as extremely decentralized implementations of services and even as the prototype of cloud architecture per-se. On the other hand, billing and/or charging of services delivered to a customer across the decentralized infrastructure requires real-time data consolidation. In view thereof, numerous approaches for improvement may be found in the prior art.

Closely related prior art may be found in EP 2 680 558 A1 which discloses a charging system for a telecommunication system operator. A charging node module is located in a first network. The first network is a telecommunication network being operated by the operator of the telecommunication system. The charging node module is configured to receive at least one charging event for each telecommunication product and service provided and to calculate a charging value associated to the charging event based on charging event details and on charging configuration data. A charging cloud module is provided remotely located from the charging node module. The charging cloud module is implemented as a cloud computing application delivered over a second network, separate from the first network. The second network is a network supporting cloud computing applications. The charging cloud module comprises at least a storage means storing a database. The database comprises charging configuration data required to calculate charging values of charging events. The charging cloud module is configured to be accessed through the second network for updating the charging configuration data, and a charging link configured to enable communication and synchronization between the charging node module and the charging cloud module.

Another related prior art may be found in profile and application servers in communication networks as disclosed in EP 1 517 497 A1, for example. The server has access interfaces corresponding to respective access protocols, and an output interface corresponding to an output protocol. A database stores a profile including basic information of each user. The server identifies the location of user requested information distributed over a network based on a user profile. The server formats the identified information based on the access protocol. Additionally, a method is disclosed for mapping and transforming requests in a distributed database system.

The contents of the prior art documents cited before shall be included into the present disclosure in its entirety by reference.

In addition, there is a general tendency towards database systems in so-called 'cloud' or 'virtualized' architecture. The underlying reason may be found in that cloud architecture is considered to have a potential for yielding numerous advantages versus conventional on-site computing as, for example, ability for load-balancing, also commonly referred to as 'cloud elasticity'. Beyond this, the cloud architecture turns out as the predestinated platform for interaction with mobile (telecommunication) devices. This is mainly due to the fact that the cloud architecture essentially relies on secure data exchange and therefore generically incorporates firewall, virtual private networking and tunneling infrastructure as required for secure remote access over public media as the internet.

There are also some challenges to be faced when integrating cloud database systems with the 'body portion' of on-site information technology and data processing, however. Accordingly, so-called 'cloud connectors' are provided on the market as front-end systems to homogenize and streamline data exchange between the cloud service provider and the client's on-site data processing systems. Additionally, the client of a cloud database system may maintain separate duplicate on-site data systems for some purpose. For example, the client may wish to maintain a data system for a first region separately from a corresponding data system for another region. Providing a set of data for each of the two data systems in a centralized data system may be implemented by creating multiple instances of a database schema for the separate data systems.

### SUMMARY

A 'mobile telecommunication device' as used herein shall refer to any kind of portable computing and/or telecommunication device equipped for wireless access to any kind of computer and/or telecommunication network. In particular, a 'mobile telecommunication device' may be a cellular phone, a smartphone, a tablet device or a similar small-size display equipped mobile telecommunication device.

The term 'cloud' as used herein shall refer to any kind of means and methods for remote and/or shared data access in computer and/or telecommunication networks according to the *NIST Definition of Cloud Computing*.

A first principal embodiment includes a telecommunication method for accessing data in a cloud database system by a mobile communication device via a digital cellular mobile telecommunication network. The method comprises a section for initiating on said mobile telecommunication device a request configured to access data organized according to a first database schema in said cloud database system. In another section of the method, the request is sent from the mobile telecommunication device to the cloud database system via a first transmission channel in said digital cellular mobile telecommunication network. In another section of the method, the request is received in said cloud database system by an interface to said first transmission channel. In another section of the method, the received request is processed in a first database server node to generate a first data view of a first instance of the first database schema in the cloud database system. The processing includes referencing, using a first view variant, one or more data tables included in the first instance of the first database schema to generate the first data view according to the request. In another section of the method, the received request is processed in a second database server node to generate a second data view of a second instance of the first database schema in the cloud database system. The processing uses a using a second view variant for referencing one or more data tables included in the second instance of the first database schema to generate the second data view according to the request.

In a more abstract definition the aforementioned embodiment may be understood as a general method for sharing data in an interconnected database system. This general method includes receiving a query configured to retrieve data under a first database schema from a database system, using the received query to generate a first data view of a first instance of the first database schema in the database system, including referencing, using a first view variant, one or more data tables including the first instance of the first database schema to generate the first data view, and using the received request to generate a second data view of a second instance of the first database schema in the database system, including referencing, using a second view variant, one or more data tables including the second instance of the first database schema to generate the second data view.

The aforementioned embodiments may include as a further enhancement to load the request from a remote computing site by means of a cloud connector and/or a firewall via a second transmission channel in said digital cellular mobile telecommunication network.

The aforementioned embodiments may include as a further alternative or cumulative enhancement to have said first and said second database server nodes being identical.

The aforementioned embodiments may include as a further alternative or cumulative enhancement to derive the request from a precompiled request definition loaded into said mobile telecommunication device via a second transmission channel in said digital cellular mobile telecommunication network.

The aforementioned enhancement may include as a further detail to have the second transmission channel in said digital cellular mobile telecommunication network being performed via SMS or USSD.

The aforementioned embodiments may include as a further enhancement to have the first data view and the second data view being separate data views stored in an instance of a shared second database schema.

The aforementioned embodiments may include as a further alternative or cumulative enhancement to generate the first result tables from the first data view by accessing data stored in the one or more data tables in the first instance of the first database schema, and to generate the second result tables from the second data view by accessing data stored in the one or more data tables in the second instance of the first database schema.

The aforementioned embodiments may include as a further alternative or cumulative enhancement to store the first view variant in a data table in reference to the request and the first instance of the first database schema and to generate the first data view by looking-up the first view variant in the data table.

The aforementioned embodiments may include as a further alternative or cumulative enhancement to store the second view variant is stored in a data table in reference to the request and the second instance of the first database schema and to generate the second data view includes looking-up the second view variant in the data table.

The aforementioned embodiments may include as a further alternative or cumulative enhancement to receive a schema defining a third data view and to modify the third data view based on one of the generated first data view and the generated second data view.

The aforementioned enhancement may include as a further detail to modify the third data view by determination of a dependence between the third data view and one of the generated first data view and the generated second data view based on a look-up in a data table and to change the schema defining the third data view to reference one of the generated first data view and the generated second data view according to the determined dependence.

The aforementioned embodiments may include as a further alternative or cumulative enhancement to replicate one or more data tables from a first and/or second external database into the first and/or second instance of the first database schema before generating the first and/or second data view.

The aforementioned embodiments may include as a further alternative or cumulative enhancement to provide the first database schema (ERP) as to have a subset of inventory identical to the database schema of said first and/or second external database.

The aforementioned enhancement may include as a further detail to return one of the first view variant and the second view variant according to the look-up in the data table.

### BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of the example embodiments and wherein:
FIG. 1 illustrates a database system in cloud architecture in accordance with one or more example embodiments.
FIG. 2A and 2B illustrate mapping tables in accordance with one or more example embodiments.
FIG. 3 illustrates a general process flow for generating data views in accordance with one or more example embodiments.
FIG. 4 illustrates a request manager for generating data views against multiple instances of a database schema using the same request in accordance with one or more example embodiments.
FIG. 5 illustrates mapping an add-on view in accordance with one or more example embodiments.

It should be noted that these Figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. For example, the relative positioning of structural elements may be reduced or exaggerated for clarity. The use of similar or identical reference numbers in the various drawings is intended to indicate the presence of a similar or identical element or feature.

### DETAILED DESCRIPTION OF THE EMBODIMENTS

While example embodiments may include various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

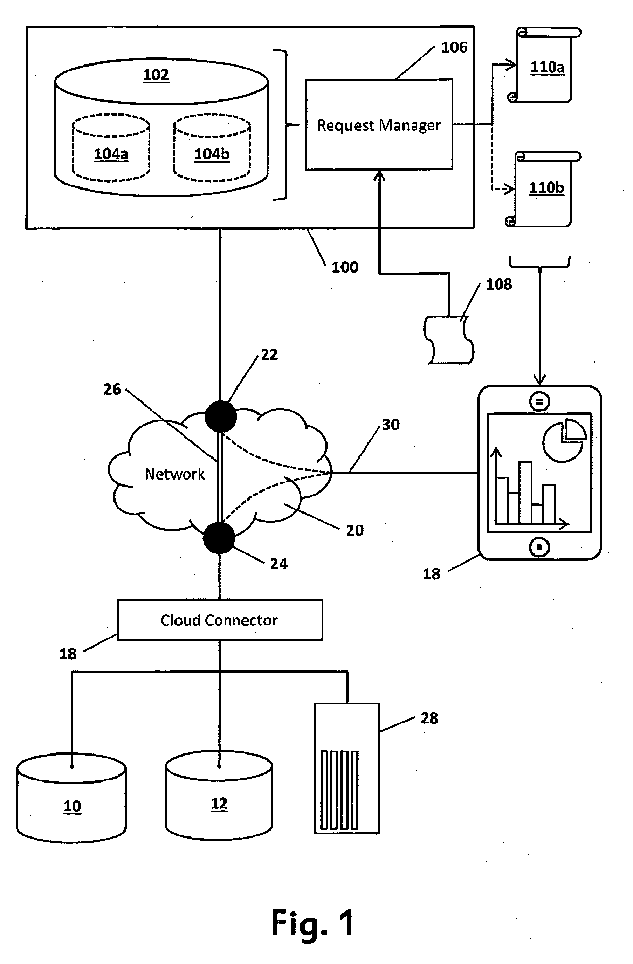

FIG. 1 illustrates a database system in accordance with one or more example embodiments. As shown in FIG. 1 a database system 100 in accordance with embodiments of the present disclosure. The database system 100 may include a database 102. One or more database schema instances ("database schemas") 104a, 104b may be defined in the database system 100. A request manager 106 may be provided to allow a user of a mobile telecommunication device 16 to remotely query the received request 108 to generate reports, result tables, and other output 110a, 110b to be displayed on the mobile telecommunication device 16, for example. The database system 100 may be provided in cloud architecture as defined before. For the sake of simplification, however, no details on the cloud architecture have been incorporated into the drawing. Functional elements have been arranged in schematic block structure instead. It should be understood that in a real world application, the functional elements of the database system 100 may be distributed onto a number of interconnected data processing sites and/or server nodes of the cloud provider. This, however, is not shown in the drawing.

In an embodiment, the database system 100 may be connected to a number of on-site client operated data systems 10 and 12 by means of a network 20. The network 20 may be a public access data communication network as, for example, the internet. The term 'on-site' shall be used for making clearer distinction to data processing being performed in the cloud database system 100. This merely reflects a typical practical situation wherein the cloud system is operated by a cloud provider whereas the on-site data processing system is operated by or on behalf of the client directly. In an embodiment, an network 20 based data link between the database system 100 and the on-site data systems 10, 12 may include an on-site data processing frontend system 18, commonly referred to as a 'cloud connector'. In an embodiment, the cloud connector 18 may be configured to provide a well-defined abstract interface versus database system 100. The cloud connector 18 may be connected to the on-site data systems 10, 12 by means of a real private networking infrastructure. In an embodiment, network 20 based data communication of the cloud connector 18 may be routed over a firewall 24 for security reasons. In the same way, another firewall 22 may be provided to protect the database system 100 against malicious attempts to internal services and resources. In an embodiment, there may be a data tunnel 26 or virtual private network between both firewalls 22, 24 to protect data communication between the database system 100 and the cloud connector 18 from eavesdropping and any kind of manipulation. In the exemplary situation, the on-site data systems 10, 12 may be provided for performing distributed or decentralized collection and/or basic processing of real-world transaction data whereas the cloud database system 100 may provide the client with applications and services for centralized and consolidated high-performance data-mining or data-warehousing based on the distributed real-world transaction data or intermediate data derived therefrom. Accordingly, the figure illustrates a configuration where the database system 100 is provided to enhance the existing on-site data systems 10, 12. Portions of the data systems 10, 12 may be migrated over, or in some situations replicated, to the database system 100. As data continues to be generated from the various real-world transactions 14, the data may continue to feed into the on-site data systems 10, 12. For the data that has been migrated or replicated, data from the real-world operations 14 may feed into the database system 100. For example, the data may be stored in database schemas 104a, 104b which may represent portions of respective data systems 10, 12 that have been migrated to the database system 100.

In an embodiment, the database system 100 may be configured to allow a user accessing data-mining or data-warehousing applications by means of a mobile telecommunication device 16 as, for example a smartphone or tablet. Data communication between the mobile telecommunication device 16 and the database system 100 may be performed by network 20 via a digital cellular mobile telecommunication link 30 as, for example, LTE, UMTS, GPRS. In some embodiments, the mobile telecommunication device 16 may be configured for accessing the on-site data processing of the client and/or the database system 100 of the cloud provider. In embodiments, access may be routed through firewall 22 and/or firewall 24 for security reasons. In more elaborated embodiments, the client may provide precompiled request definitions to support the mobile telecommunication device 16 user in querying the cloud database system 100. For example, the client may provide precompiled request definitions to allow the user of the mobile telecommunication device 16 to retrieve data contained in database schemas 104a, 104b in a specific structure or layout. In some embodiments, the mobile telecommunication device 16 user may retrieve such request 108 from an on-site server 28 via the cloud connector 108 and the firewall 22. In some embodiments, the request 108 may be sent from the mobile telecommunication device 16 to the request manager 106 of the cloud database system 100. In some embodiments, the request manager 106 may receive the request 108 and, using the received request 108, processing the request to extract data (e.g., result tables 110a) from a database schema (e.g., 104a).

As is conventionally understood, a "database schema" is a machine readable specification that defines an organization of data in a database. For example, the data may be organized into a set of data tables that are called out in the specification. Each data table may have table fields, field attributes, and so on which are stored in the specification. The specification may be stored in the database itself or in an external file and may be called a data dictionary.

A user may create an "instance" of a database schema in a database. For example, when a database schema has been instantiated, the database system 100 may create instances of the data tables defined in the database schema; e.g., by creating a set of data files in the database system. The data table instances may then be populated with actual data in accordance with the organizational scheme defined by the database schema.

In most contexts, the term "database schema" may be understood to refer to an "instance" of the database schema, because in most cases one speaks of specific instances of a database schema rather than the data organization itself. For example, 104a, 104b in FIG. 1 represent instances of a database schema. Accordingly, the phrase "database schema" will be understood as referring to instances of the database schema rather than referring to the organization of the data. If "database schema" is intended to refer to the organization of the data itself, that intention will be made explicit.

Multiple instances of the same database schema may be created in a database system. An example of how this can happen may be provided by the configuration shown in FIG. 1. Suppose, for example, the client uses a specific system to manage the real-world transaction data among its various locations, and that the client has deployed a copy of the system in the first region as the data system 10 and another copy in a second region as the data system 12. Suppose further that the client has migrated its data from each data system 10, 12 to the database system 100. For some reasons it may be desired to keep the data in the first region separate from the data in the second region. To do this, the client may define a database schema in the database system 100 which duplicates the data organization that is used to store data in the data systems 10 and 12. Accordingly, the client may create a first instance 104a of the database schema for the data in the first region by migrating or replicating the data from data system 10 into the first instance. The client may also create a second instance 104b of the database schema for data in the second region by migrating or replicating the data from data system 12 into the second instance. In such situation, the database schemas 104a, 104b represent multiple instances of the same (common) database schema. This common database schema may be identical to the database schema of the database in data system 10 and/or the database in data system 12, if present. However, this is not necessary. In general, only a subset of the inventory in the database schema instances 104a, 104b needs to be identical to the inventory of the data systems 10 and/or 12, respective.

Continuing with FIG. 1, in accordance with principles of the present invention, the request manager 106 may generate separate data views for each of the multiple instances 104a, 140b of the database schema using the same request. For example, the request manager 106 may use request 108 in a first data view (not shown) to allow a mobile telecommunication device 16 user to generate reports and other output tables 110a from data contained in database schema 104a using the first data view. The request manager 106 may use the same request 108 in a second data view (not shown) to allow the same or another mobile telecommunication device 16 user to generate other output 110b from data contained in database schema 104b using the second data view. This aspect of the present disclosure will be discussed in more detail below.

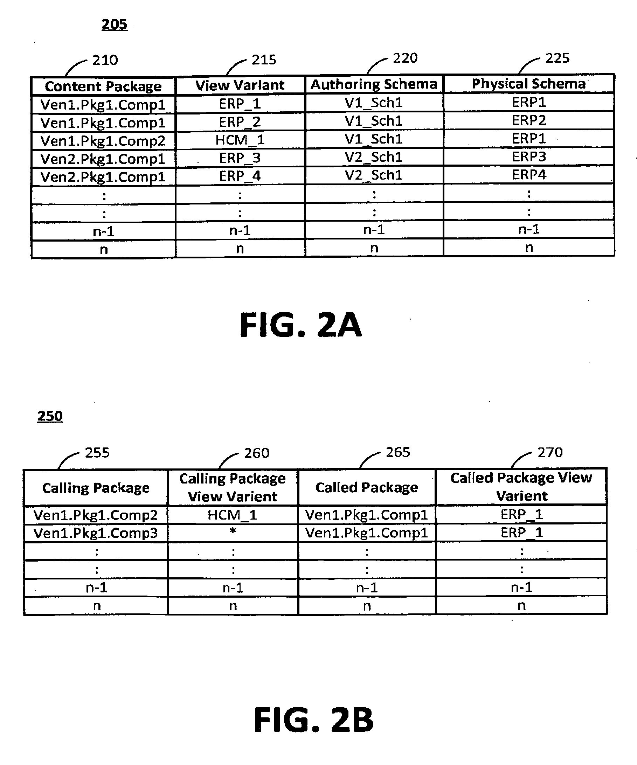

FIG. 2A and 2B illustrate mapping tables in accordance with one or more example embodiments. As shown in FIG. 2A, mapping table 205 includes four columns. The four columns are content package 210, view variant 215, authoring schema 220, and physical schema 225. Mapping table 205 may be configured to map view variants to different sets of views accessing different schemes. A view variant may be used to uniquely identify content packages. Mapping table 205 allows schema mapping on content package level such that each content package may have a different schema mapping. A content package may or may not have the same schema. A content package may or may not have the same physical schema.

For example, the first two rows of mapping table 205 include view variant, ERP_1 and ERP_2 respectively. Each view variant is associated with a same content package Ven1.Pkg1.Comp1. The content package may be associated with a vendor, a package name, and a component name. However, each view variant is associated with a different physical (e.g., database) schema, ERP1 and ERP2 respectively. As shown in FIG. 1, this scenario may occur if the client uses a specific system to manage the flow of information among its various locations, and that the client has deployed a copy of the specific system in, for example, the first region as data system 10 and another copy in the second region as data system 12.

Utilizing mapping table 205, view variants may be configured by administrators of a system and may be used to get different sets of views accessing different schemes. System administrators may specify how many different variants of the views the system administrator needs and the possibility exists to specify how the schema mapping of each of the specified variants shall be configured. In the scenario above the system administrator may specify to have two view variants and would specify that one view variant is accessing physical schema ERP1 and the other accessing physical schema ERP2.

Schema mapping is considered when database catalog objects are generated based on the modeled objects in the content packages. When catalog objects are generated an extended schema mapping with variants is taken into account. The extended schema mapping with variants may create one catalog object per view variant created. Each catalog object (per view variant) considering the corresponding schema mapping from an authoring schema to a physical schema.

Further, views (hereinafter called calling views for clarity) based on views for which there are different view variants (e.g., ERP_1 and ERP_2 shown in mapping table 205) (hereinafter called mapped views for clarity) may specify which of the view variants the calling views call. With one view variant there is no confusion as to which mapped view a calling view refers to. However, if more than one mapped view exists for a given content package, a calling view may refer to an incorrect mapped view. Therefore another mapping table 250 is defined.

As shown in FIG. 2B, mapping table 250 includes four columns. The four columns are calling package 255, calling package view variant 260, called package 265, and called package view variant 270. Mapping table 250 may be configured to map a calling view correct mapped view. For example, a 'HCM' named component of a content package may include a calling view that calls an 'ERP' named component (e.g., mapped view). Mapping table 250 accordingly shows view variant HCM_1 mapped to view variant ERP_1.

Utilizing mapping table 250, view variants may be configured by administrators of a system and may be used to map calling views to mapped views. In the scenario above the system administrator may specify to have a calling view refer to the correct mapped view if two or more view variants could have been referred to by the calling view.

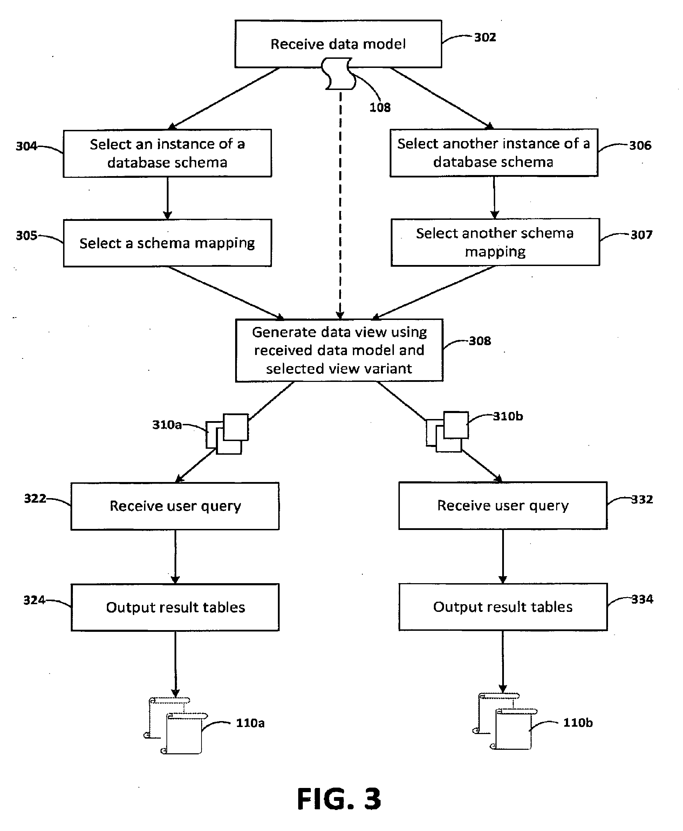

FIG. 3 illustrates a general process flow for generating data views in accordance with one or more example embodiments. As shown in FIG. 3, a general workflow in database system 100 according to example embodiments is shown. The workflow may begin in a process block 302, where the database system 100 receives a request 108 relative to the database 102. In some embodiments, the request 108 may contain data descriptive to a certain database operation, as for example a SQL statement or, more particular, a SQL query (e.g., JOIN, SELECT, AVERAGE, etc.) to be performed on data tables and table fields including a given database schema. Alternatively, the request 108 may be of the RPC type as, for example XML-RPC or SOAP.

In accordance with example embodiments, the request 108 may relate to any instance of the database schema from among multiple instances. For example, in a process block 304, a user may select an instance (e.g., 104a) of the database schema to be the target of the request; for example, by specifying the name of the instance. In some embodiments, a user interface may display a list of database schema instances to choose from.

Upon selection of instance of the database schema from among multiple instances, the instance may be mapped to database schema using a view variant. For example, in a process block 304, the request manager 106 may refer to (e.g., utilizing a look-up or query) mapping table 205 to determine the view variant for the database schema. For example, if the user selected an instance of the database schema associated with content package Ven1.Pkg1.Comp1 and physical schema ERP1, the request manager 106 may determine the view variant as ERP_1. A resultant schema mapping for a data table named table1 may be "ERP_1/ Ven1.Pkg1.Comp1/table 1".

In a process block 308, the request manager 106 may generate a data view 310a using the request 108 received in process block 302. The data view 310a may then be queried by the user. For example, in step 322, one or more queries (e.g., SELECT) may be received from the user and in step 324 results 110a from the query may be output to the user; e.g., on a display, printed out, and so on. A data view contains the information which specifies a "view" (e.g., tables, graphs, reports, etc.) of stored data. A data view specifies which tables to access, which fields of these tables, etc. The data view may be accessed via an SQL select statement to return data, for example, in a data table referred to as a "result table". The result table may be presented to the user, for example, on a display. A data view is typically persisted (e.g., stored in a data store), while result tables are typically transient (e.g., displayed on a monitor), but may be printed (e.g., reports).

Another user may want to model another instance of the database schema using the same request 108. Accordingly, in a process block 306, the other user may select another database schema (e.g., 104b) to be modeled. Upon selection of another instance of the database schema, the instance may be mapped to the database schema using another view variant. For example, in a process block 305, the request manager 106 may refer to (e.g., utilizing a look-up or query) mapping table 205 to determine the view variant for the database schema. For example, if the user selected an instance of the database schema associated with content package Ven1.Pkg1.Comp1 and physical schema ERP2, the request manager 106 may determine the view variant as ERP_2. A resultant schema mapping for a data table named table1 may be "ERP_2/Ven1.Pkg1.Comp1/table1".

Process block 308 may be invoked to cause the request manager 106 to generate a second data view 310b using the request 108 received in process block 302. The user may then query the second data view 310b (in a step 332) to produce various output 110b (in a step 334).

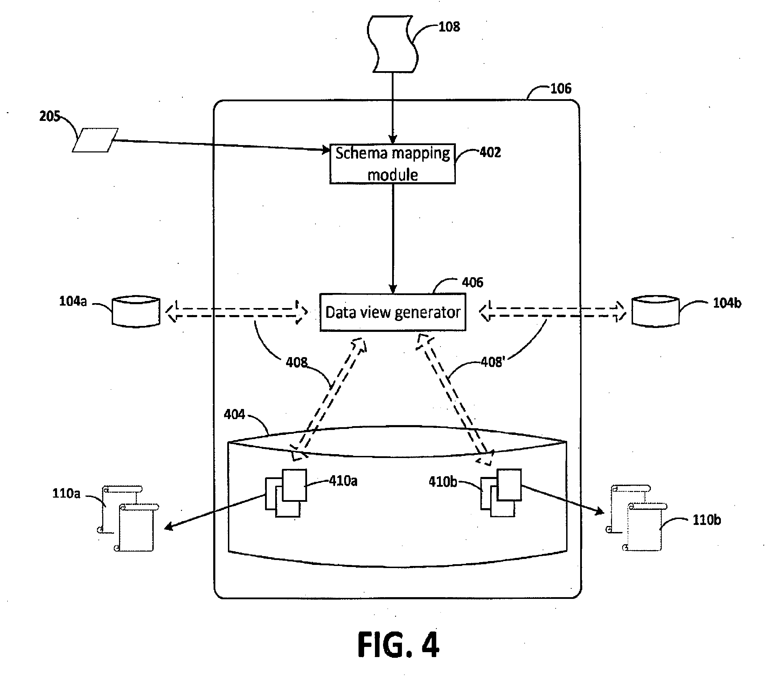

FIG. 4 illustrates a request manager for generating data views against multiple instances of a database schema using the same request in accordance with one or more example embodiments. As shown in FIG. 4, in some embodiments, the request manager 106 may include a schema mapping module 402, a data view generator 406, and a database schema 404. The request 108 may designate a specific instance of a database schema (e.g., 104a) in the database system 100. When the request manager 106 receives the request 108, the schema mapping module 402 may map the received request as mapped request 408 and associate the received mapped request 408 with the designated database schema 104a.

In accordance with example embodiments, the schema mapping module 402 may map another view 408' of the received request 108 and associate this view 408' with another instance of the database schema (e.g., 104b). For example, as described above with reference to FIGS. 2A and 3, an instance of the database schema associated with content package Ven1.Pkg1.Comp1 and physical schema ERP1, the request manager 106 may determine the view variant as ERP_1 and an instance of the database schema associated with content package Ven1.Pkg1.Comp1 and physical schema ERP2, the request manager 106 may determine the view variant as ERP_2.
For example, the mapped request 408 may refer to data tables in database schema 104a as the source of data for the request differently than the data tables in database schema 104b. Accordingly, mapped request 408' may be mapped such that that the corresponding data tables in database schema 104b are referred to differently than the corresponding data tables in database schema 104a. For example, the names of the data tables in database schema 104a are the same as the names of the data tables in database schema 104b. However, the full technical name of a data table in a given database schema includes the name of the database schema to which the data table belongs; e.g., SCHEMA1.TABLE1 may be the full technical name of TABLE1 in database schema SCHEMA1. Accessing a data table requires the full technical name. Therefore according to example embodiments, the full technical name may be modified according to the mapping (e.g., based on the mapping in table 205); hence "Select From ERP_1.SCHEMA1.TABLE1 ... " or "Select From ERP_2.SCHEMA1.TABLE1 ...".

The data view generator 406 may receive a reference to the mapped request 408 and generate a data view 410a which references data tables in the associated database schema 104a. Likewise, the data view generator 406 may receive a reference to the mapped request 408' and generate a data view 410b which references data tables in the associated database schema 104b.

In some embodiments, the data views 410a, 410b may be persisted in a database schema. Referring to FIG. 4, for example, a database schema 404 may store data view 410a. A user may execute the data view 410a to produce result tables 110a from data referenced in database schema 104a. Likewise, the database schema 404 may store data view 410b, and a user may execute data view 410b to produce output 110b from data referenced in database schema 104b.

Since the mapped request 408 uses data from database schema 104a and mapped request 408' uses data from database schema 104b, the data contained in respective result tables 110a, 110b generated by executing respective the data views 410a, 410b are likely to be different. However, because the mapped request 408' and the mapped request 408 share the same authoring schema, the names of the data views 410a and 410b will be identical. For example, if the mapped request 408 specifies a data view called ViewOnTotalItems, then the data view 410a will use the name ViewOnTotalItems and data view 410b would also use the name ViewOnTotalItems, thus creating a naming conflict.

According to example embodiments, the method described above may further include receiving a schema defining a third data view, and modifying the third data view based on one of the generated first data view and the generated second data view. Modifying the third data view may include determining a dependence between the third data view and one of the generated first data view and the generated second data view based on a look-up in a data table, and changing the schema defining the third data view to reference one of the generated first data view and the generated second data view based on the determined dependence.

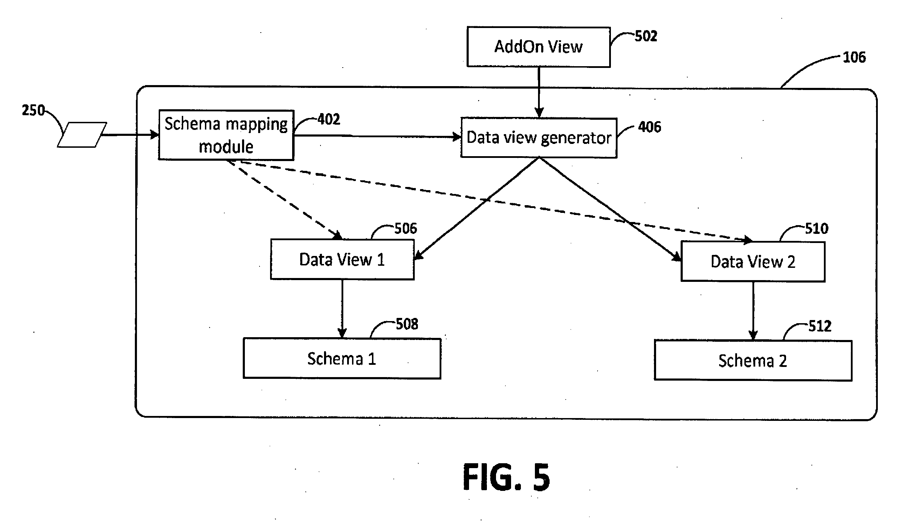

FIG. 5 illustrates mapping an add-on view in accordance with one or more example embodiments. As shown in FIG. 5, mapping an add-on view may include an add-on view block, the request manager 106 (including the schema mapping module 402 and the data view generator 406), a data view 506, a data view 510, a schema 1 and a schema 2. As discussed above, calling views may be based on mapped views; FIG. 5 illustrates add-on view 502 as a calling view and one of data view 506 and data view 510 being a mapped view. The schema mapping module 402 may utilize table 250 to map add-on view 502 to one of data view 506 and data view 510. For example, if table 250 indicates add-on view 502 as referencing data view 506, schema 508 may be the resultant schema. On the other hand, if table 250 indicates add-on view 502 as referencing data view 510, schema 512 may be the resultant schema.
Continuing the two examples above, the full technical name of a data view in a given database schema includes the name of the database schema to which the data view belongs; e.g., SCHEMA1.VIEW1 (or ViewOnTotalltems) may be the full technical name of VIEW1 (or ViewOnTotalltems) in database schema SCHEMA1. Accessing a data view requires the full technical name. Therefore, according to example embodiments, the full technical name may be modified according to the mapping (e.g., based on the mapping in table 250); hence a query snippet may read as "Select From ERP_1.SCHEMA1.VIEW1 ... " or "Select From ERP_2.SCHEMA1.VIEW1 ..." and, Select From ERP_1.SCHEMA1.ViewOnTotalltems ..." or Select From ERP_2.SCHEMA1.ViewOnTotalltems ...".

Accordingly, if no view variants are introduced the schema mapping module 402 will not acquire and append a prefix to the technical name of the add-on view. However, for each dependency, specifying (e.g., utilizing table 250) which of the view variants are relevant for each calling package may link the corresponding mapped view to the calling view.

Some of the above example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figure. The processes may correspond to methods, functions, procedures, subroutines, subprograms, etc.

Methods discussed above, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks.

Specific structural and functional details disclosed herein are merely representative for purposes of describing example embodiments. Example embodiments, however, be embodied in many alternate forms and should not be construed as limited to only the embodiments set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

It should also be noted that in some alternative implementations, the functions/acts noted may occur out of the order noted in the figures. For example, two figures shown in succession may in fact be executed concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of the above example embodiments and corresponding detailed description are presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the above illustrative embodiments, reference to acts and symbolic representations of operations (e.g., in the form of flowcharts) that may be implemented as program modules or functional processes include routines, programs, objects, components, data structures, etc., that perform particular tasks or implement particular abstract data types and may be described and/or implemented using existing hardware at existing structural elements. Such existing hardware may include one or more Central Processing Units (CPUs), digital signal processors (DSPs), application-specific-integrated-circuits, field programmable gate arrays (FPGAs) computers or the like.

Elements described herein as communicating with one another are directly or indirectly capable of communicating over any number of different systems for transferring data, including but not limited to shared memory communication, a local area network, a wide area network, a telephone network, a cellular network, a fiber-optic network, a satellite network, an infrared network, a radio frequency network, and any other type of network that may be used to transmit information between devices. Moreover, communication between systems may proceed over any one or more transmission protocols that are or become known, such as Asynchronous Transfer Mode (ATM), Internet Protocol (IP), Hypertext Transfer Protocol (HTTP) and Wireless Application Protocol (WAP).

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" of "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the example embodiments are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The example embodiments not limited by these aspects of any given implementation.

Lastly, it should also be noted that whilst the accompanying claims set out particular combinations of features described herein, the scope of the present disclosure is not limited to the particular combinations hereafter claimed, but instead extends to encompass any combination of features or embodiments herein disclosed irrespective of whether or not that particular combination has been specifically enumerated in the accompanying claims at this time.

## Claims

1. A telecommunication method for accessing data in a cloud database system (100) by a mobile communication device (16) via a digital cellular mobile telecommunication network (20), said method comprising:
initiate on said mobile telecommunication device (16) a request (108) configured to access data organized according to a first database schema (ERP) in said cloud database system (100);
sending said request (108) from said mobile telecommunication device (16) to said cloud database system (100) via a first transmission channel (28) in said digital cellular mobile telecommunication network (20);
receiving said request (108) in said cloud database system (100) by an interface to said first transmission channel (28);
using, in a first database server node, the received request (108) to generate a first data view (110a) of a first instance (ERP1; 104a) of the first database schema (ERP) in the cloud database system (100), including referencing, looking-up a first view variant (310a, 410a, 506; ERP_1) being stored in a data table (205) in reference to the mapped request and the first instance (ERP1) of the first database schema (ERP), one or more data tables included in the first instance (104a) of the first database schema (ERP) to generate the first data view (110a); and
using, in a second database server node, the received request (108) to generate a second data view (110b) of a second instance (ERP2; 104b) of the first database schema (ERP) in the cloud database system (100), including referencing, looking-up a second view variant (310b, 410b, 510; ERP_2) being stored in a data table (205) in reference to the mapped request and the second instance (ERP_2) of the first database schema (ERP), one or more data tables included in the second instance (104b) of the first database schema (ERP) to generate the second data view (110b);
receiving a schema defining a third data view (502); and modifying the third data view (502) based on one of the generated first data view (506) and the generated second data view (510) wherein modifying the third data view (502) includes:
determining a dependence between the third data view (502) and one of the generated first data view (506) and the generated second data view (510) based on a look-up in a data table (250) to return one of the first view variant (ERP_1; 506) and the second view variant (ERP_2; 510); and
changing the schema defining the third data view (502) to reference one of the generated first data view (506) and the generated second data view (510) based on the determined dependence.

2. The method of claim 1, wherein said request (108) is loaded from a remote computing site (28) by means of a cloud connector (18) and/or a firewall (22) via a second transmission channel in said digital cellular mobile telecommunication network (20).

3. The method of claim 1 or 2, wherein said first and said second database server node being identical.

4. The method of any preceding claim, wherein the request (108) being derived from a precompiled request definition loaded into said mobile telecommunication device (16) via a second transmission channel (28) in said digital cellular mobile telecommunication network (20).

5. The method of claim 4, wherein said second transmission channel (28) in said digital cellular mobile telecommunication network (20) being SMS or USSD.

6. The method of any preceding claim, wherein the first data view (410a) and the second data view (410b) are separate data views stored in an instance (404) of a second database schema (V1_Sch1, V2_Sch1).

7. The method of any preceding claim, wherein
first result tables (110a) are generated from the first data view by accessing data stored in the one or more data tables in the first instance (104a) of the first database schema (ERP), and
second result tables (110b) are generated from the second data view by accessing data stored in the one or more data tables in the second instance (104b) of the first database schema (ERP).

8. The method of any preceding claim, further comprising:
replicating one or more data tables from a first and/or second external database (10, 12) into the first and/or second instance (104a, 104b) of the first database schema (ERP) before generating the first and/or second data view (110a, 110b).

9. The method of claim 8, wherein the database schema of said first and/or second external database (10, 12) has a database schema defining a subset of inventory identical to the first database schema (ERP).

10. A mobile telecommunication network management system, comprising a network (20), said network (20) having a digital cellular telecommunication network link (28), and a database system (100), said mobile telecommunication network management system being configured (100) to perform a method according to any preceding claim.

11. A non-transitory computer-readable storage medium having stored thereon computer executable program code which, when executed on a processor in a mobile telecommunication network management system according to the preamble of claim 15, causes said mobile telecommunication network management system to perform a method according to anyone of claims 1 to 10.

## Patentansprüche

1. Telekommunikationsverfahren zum Zugreifen auf Daten in einem Cloud-Datenbanksystem (100) durch eine Mobilkommunikationsvorrichtung (16) über ein digitales zelluläres Mobiltelekommunikationsnetz (20), wobei das Verfahren umfasst:
Initiieren einer Anfrage (108), die dafür ausgelegt ist, auf Daten zuzugreifen, die gemäß einem ersten Datenbankschema (ERP) in dem Cloud-Datenbanksystem (100) organisiert sind, an der Mobiltelekommunikationsvorrichtung (16);
Senden der Anfrage (108) von der Mobiltelekommunikationsvorrichtung (16) an das Cloud-Datenbanksystem (100) über einen ersten Sendekanal (28) in dem digitalen zellulären mobilen Mobiltelekommunikationsnetz (20);
Empfangen der Anfrage (108) in dem Cloud-Datenbanksystem (100) durch eine Schnittstelle mit dem ersten Sendekanal (28);
Verwenden der empfangenen Anfrage (108) in einem ersten Datenbank-Serverknoten, um eine erste Datenansicht (110a) einer ersten Instanz (ERP1; 104a) des ersten Datenbankschemas (ERP) in dem Cloud-Datenbanksystem (100) zu erzeugen, einschließlich einer Referenzierung, bei einem Nachschlagen einer ersten Ansichtsvariante (310a, 410a, 506; ERP 1), die in einer Datentabelle (205) gespeichert ist, unter Bezugnahme auf die abgebildete Anfrage und die erste Instanz (ERP1) des ersten Datenbankschemas (ERP), einer oder mehrerer Datentabellen, die in der ersten Instanz (104a) des ersten Datenbankschemas (ERP) enthalten ist bzw. sind, um die erste Datenansicht (110a) zu erzeugen; und Verwenden der empfangenen Anfrage (108) in einem zweiten Datenbank-Serverknoten, um eine zweite Datenansicht (11 Cb) einer zweiten Instanz (ERP2; 104b) des ersten Datenbankschemas (ERP) im Cloud-Datenbanksystem (100) zu erzeugen, einschließlich einer Referenzierung, bei einem Nachschlagen einer zweiten Ansichtsvariante (310b, 410b, 510; ERP_2), die in einer Datenbanktabelle (205) gespeichert ist, unter Bezugnahme auf die abgebildete Anfrage und die zweite Instanz (ERP 2) des ersten Datenbankschemas (ERP), einer oder mehrerer Datentabellen, die in der zweiten Instanz (104b) des ersten Datenbankschemas (ERP) enthalten sind, um die zweite Datenbankansicht (110b) zu erzeugen;
Empfangen eines Schemas, das eine dritte Datenansicht (502) definiert; und Modifizieren der dritten Datenansicht (502) auf Basis der erzeugten ersten Datenansicht (506) oder der erzeugten zweiten Datenansicht (510); wobei das Modifizieren der dritten Datenansicht (502) beinhaltet:
Feststellen einer Abhängigkeit zwischen der dritten Datenansicht (502) und der erzeugten ersten Datenansicht (506) oder der erzeugten zweiten Datenansicht (510) auf Basis eines Nachschlagens in einer Datentabelle (250), um die erste Ansichtsvariante (ERP_1; 506) oder die zweite Ansichtsvariante (ERP_2; 510) zurückzumelden; und
Ändern des Schemas, das die dritte Datenansicht (502) definiert, um die erzeugte erste Datenansicht (506) oder die erzeugte zweite Datenansicht (510) zu referenzieren, auf Basis der festgestellten Abhängigkeit.

2. Verfahren nach Anspruch 1, wobei die Anfrage von einem fernen Rechenort (28) mittels eines Cloud Connector (18) und/oder einer Firewall (22) über einen zweiten Sendekanal in dem digitalen zellulären Mobiltelekommunikationsnetz (20) geladen wird.

3. Verfahren nach Anspruch 1 oder 2, wobei der erste und der zweite Datenbank-Serverknoten identisch sind.

4. Verfahren nach einem der vorangehenden Ansprüche, wobei die Anfrage (108) von einer vorkompilierten Anfragedefinition abgeleitet wird, die über einen zweiten Sendekanal (28) in dem digitalen zellulären Mobiltelekommunikationsnetz (20) in die Mobiltelekommunikationsvorrichtung (16) geladen wird.

5. Verfahren nach Anspruch 4, wobei der zweite Sendekanal (28) in dem digitalen zellulären Mobiltelekommunikationsnetz (20) SMS oder USSD ist.

6. Verfahren nach einem der vorangehenden Ansprüche, wobei die erste Datenansicht (410a) und die zweite Datenansicht (410b) separate Datenansichten sind, die in einer Instanz (404) eines zweiten Datenbankschemas (V1_Sch1, V2_Sch1) gespeichert sind.

7. Verfahren nach einem der vorangehenden Ansprüche, wobei
durch Zugreifen auf Daten, die in der einen oder den mehreren Datentabellen in der ersten Instanz (104a) des ersten Datenbankschemas (ERP) gespeichert sind, erste Ergebnistabellen (110a) aus der ersten Datenansicht erzeugt werden, und
durch Zugreifen auf Daten, die in der einen oder den mehreren Datentabellen in der zweiten Instanz (104b) des ersten Datenbankschemas (ERP) gespeichert sind, zweite Ergebnistabellen (110b) aus der zweiten Datenansicht erzeugt werden.

8. Verfahren nach einem der vorangehenden Ansprüche, ferner umfassend:
Replizieren einer oder mehrerer Datentabellen aus einer ersten und/oder einer zweiten externen Datenbank (10, 12) in die erste und/oder zweite Instanz (104a, 104b) des ersten Datenbankschemas (ERP) vor der Erzeugung der ersten und/oder zweiten Datenansicht (110a, 110b).

9. Verfahren nach Anspruch 8, wobei das Datenbankschema der ersten und/oder der zweiten externen Datenbank (10, 12) ein Datenbankschema aufweist, das einen Untersatz eines Verzeichnisses definiert, das mit dem ersten Datenbankschema (ERP) identisch ist.

10. Mobiltelekommunikationsnetz-Verwaltungssystem, ein Netz (20) umfassend, wobei das Netz (20) eine Netzanbindung (28) für ein digitales zelluläres Telekommunikationsnetz und ein Datenbanksystem (100) aufweist, wobei das Mobiltelekommunikationsnetz-Verwaltungssystem dafür ausgelegt ist (100), ein Verfahren nach einem der vorangehenden Ansprüche auszuführen.

11. Nicht-transitorisches, computerlesbares Speichermedium, auf dem ein computerausführbarer Programmcode gespeichert ist, der, wenn er auf einem Prozessor in einem Mobiltelekommunikationsnetz-Verwaltungssystem gemäß der Präambel von Anspruch 15 ausgeführt wird, bewirkt, dass das Mobiltelekommunikationsnetz-Verwaltungssystem ein Verfahren nach einem der Ansprüche 1 bis 10 ausführt.

## Revendications

1. Procédé de télécommunication pour avoir accès aux données dans un système de base de données dans un nuage (100) par un dispositif de communication mobile (16) par l'intermédiaire d'un réseau de télécommunication digital cellulaire mobile (20), ledit procédé comprenant :
l'initiation d'une demande (108) sur ledit dispositif de télécommunication mobile (16) configuré pour avoir accès aux données organisées selon un premier schéma de base de données (ERP) dans ledit système de bases de données dans le nuage (100) ;
l'envoi de ladite demande (108) à partir dudit dispositif de télécommunication mobile (16) audit système de bases de données dans le nuage (100) par l'intermédiaire d'un premier canal de transmission (28) dans ledit réseau de communication cellulaire digital mobile (20) ;
la réception de ladite demande (108) dans ledit système de bases de données dans le nuage (100) par une interface vis-à-vis dudit premier canal de transmission (28) ;
l'utilisation, dans un premier noeud de serveur de la base de données, de la demande reçue (108) pour générer une première visualisation des données (110a) d'une première instance (ERP1 ; 104a) du premier schéma de la base de données (ERP) dans le système de base de données dans le nuage (100), comprenant le référencement, la recherche d'une première version de la visualisation (310a, 410a, 506 ; ERP_1) qui est stockée dans un tableau de données (205) en référence à la demande mise en correspondance et la première instance (ERP 1) du premier schéma de la base de données (ERP), un ou plusieurs tableaux de données compris dans la première instance (104a) du premier schéma de la base de données (ERP) pour générer la première visualisation des données (110a) ; et
l'utilisation, dans un second noeud de serveur de la base de données, de la demande reçue (108) pour générer une seconde visualisation des données (110b) d'une seconde instance (ERP2 ; 104b) du premier schéma de la base de données (ERP) dans le système de base de données dans le nuage (100), comprenant le référencement, la recherche d'une seconde version de la visualisation (310b, 410b, 510 ; ERP_2) qui est stockée dans un tableau de données (205) en référence à la demande mise en correspondance et la seconde instance (ERP_2) du premier schéma de la base de données (ERP), un ou plusieurs tableaux de données compris dans la seconde instance (104a) du premier schéma de la base de données (ERP) pour générer la seconde visualisation des données (110b) ;
la réception d'un schéma définissant une troisième visualisation des données (502) ; et
la modification de la troisième visualisation des données (502) qui repose sur l'une des premières visualisations des données générées (506) et la seconde visualisation des données générées (510) dans laquelle la modification de la troisième visualisation des données (502) comprend :
la détermination d'une dépendance entre la troisième visualisation des données (502) et l'une parmi les premières visualisations des données générées (506) et la seconde visualisation des données générées (510) basée sur la recherche dans un tableau de données (250) afin de renvoyer l'une des variations entre la première variation de la visualisation (ERP_1 ; 506) et la seconde variation de la visualisation (ERP_2 ; 510) ; et
le changement du schéma définissant la troisième visualisation des données (502) afin de référencer l'une des visualisations entre la première visualisation des données générée (506) et la seconde visualisation des données générée (510) sur la base de la dépendance déterminée.

2. Procédé selon la revendication 1, dans lequel ladite demande (108) est chargée à partir d'un site informatique distant (28) au moyen d'un connecteur au nuage (18) et/ou d'un pare-feu (22) par l'intermédiaire d'un second canal de transmission dans ledit réseau de communication cellulaire digital mobile (20).

3. Procédé selon les revendications 1 ou 2, dans lequel ledit premier et ledit second noeuds de serveur de la base de données sont identiques.

4. Procédé selon l'une quelconque des revendications précédentes, dans lequel la demande (108) est issue d'une définition de la demande précompilée chargée dans ledit dispositif de télécommunication mobile (16) par l'intermédiaire d'un second canal de transmission (28) dans ledit réseau de communication cellulaire digital mobile (20).

5. Procédé selon la revendication 4, dans lequel ledit second canal de transmission (28) dans ledit réseau de communication cellulaire digital mobile (20) est un SMS ou un USSD.

6. Procédé selon l'une quelconque des revendications précédentes, dans lequel la première visualisation des données (410a) et la seconde visualisation des données (410b) sont des visualisations des données séparées stockées dans une instance (404) du second schéma de la base de données (V1_Sch1, V2_Sch1).

7. Procédé selon l'une quelconque des revendications précédentes, dans lequel
les premiers tableaux de résultats (110a) sont générés à partir de la première visualisation des données en ayant accès aux données stockées dans le ou dans plusieurs tableau(x) de données dans la première instance (104a) du premier schéma de la base de données (ERP), et
les seconds tableaux de résultats (110b) sont générés à partir de la seconde visualisation des données en ayant accès aux données stockées dans le ou dans plusieurs tableau(x) de données dans la seconde instance (104b) du premier schéma de la base de données (ERP).

8. Procédé selon l'une quelconque des revendications précédentes, comprenant en outre :
la duplication de l'un ou de plusieurs tableaux de données à partir d'une première et/ou d'une seconde base de données externes (10, 12) dans la première et/ou la seconde instance (104a, 104b) du premier schéma de la base de données (ERP) avant de générer la première et/ou la seconde visualisation des données (110a, 110b).

9. Procédé selon la revendication 8, dans lequel le schéma de la base de données de ladite première et/ou seconde base de données externe (10, 12) a un schéma de base de données qui définit un sous-ensemble de répertoire identique au premier schéma de la base de données (ERP).

10. Système de gestion d'un réseau de télécommunication mobile, comprenant un réseau (20), ledit réseau (20) ayant un lien (28) vers le réseau de télécommunication cellulaire digital, et un système de base de données (100), ledit système de gestion d'un réseau de télécommunication mobile étant configuré (100) pour réaliser un procédé selon l'une quelconque des revendications précédentes.

11. Support de stockage non transitoire lisible par ordinateur sur lequel est stocké un code de programme exécutable par ordinateur qui, quand il est exécuté par un processeur dans un système de gestion d'un réseau de télécommunication mobile selon le préambule de la revendication 15, déclenche la réalisation par le système de gestion d'un réseau de télécommunication mobile d'un procédé selon l'une quelconque des revendications 1 à 10.
